# EUROPEAN PATENT APPLICATION

(11) **EP 2 108 821 A2**
(43) Date of publication of application: **14.10.2009**
(21) Application number: 08254041.0
(22) Date of filing: 17.12.2008
(51) Int. Cl.: F03D 3/02, F03D 3/06

(54) **Shaftless vertical axis wind turbine**

(30) Priority: 29.02.2008 HK 08102329; 24.04.2008 HK 08104604; 25.04.2008 HK 08104651; 14.07.2008 HK 08107704; 11.08.2008 HK 08108816
(71) Applicant: Hopewell Wind Power Limited, Tortola (VI)
(72) Inventor: Wu, Gordon Ying Sheung, Hong Kong (HK); Wu, Thomas Jefferson, Hong Kong (HK); Wu, Caro, Hong Kong (HK)
(74) Representative: Martin, David John

(57) **Abstract**

A shaftless vertical axis wind turbine has a stationary hollow core having inner and outer circular walls with a void between the inner and outer walls. A rotor is rotatably supported about the core and has a plurality of radially extending rotor arms each having a wind engaging rotor blade located at a distal end.

## Description

### Background to the invention

### 1. Field of the Invention

The current invention relates to wind turbines and more particularly to vertical axis wind turbines.

### 2. Background Information

With the continuing increase in demand for energy, especially in developing countries, and a realisation that traditional fossil fuel supplies are limited, there is increasing interest in new and improved ways to harness renewable energy sources such as sunlight, wind, rain (water), tides and geothermal heat, which are naturally replenished. Hydro-electricity generation has been a mainstay of renewable energy for many decades. However, with greater importance being placed on the environmental impact of damming waterways and the realisation that clean fresh drinking water is an important commodity, hydro-generation schemes are becoming less desirable. Attention has now turned to wind as a source of future large scale electricity generation.

Wind turbines can be characterised as either horizontal axis or vertical axis turbines. Horizontal axis turbines typically comprise a tower with a large fan-like blade rotating around a horizontal axis much like a windmill. Hitherto the largest horizontal axis wind turbines are about the height of a 40-storey building and have a blade diameter of approximately 126 metres. In order to produce sufficient electricity for supply to a public electricity network, horizontal axis wind turbines are located in large wind farms that can comprise hundreds of wind turbines spread over a large area. Although they use an abounded renewable energy source these wind farms occupy large areas of land and are unsightly.

Conventional vertical axis wind turbines have a main rotor shaft extending vertically. The main advantage of vertical axis turbines is that the generator and gearbox can be placed at the bottom of the shaft near the ground meaning that the tower does not need to support this weight. Additionally, a vertical shaft wind turbine can accept wind from any direction and does not need to turn, or yaw, about its vertical axis, to face the prevailing wind direction. However, there is a significant amount of lateral force applied to the vertical shaft and turbine structure due to the larger surface area that vertical axis turbines presents to the wind. Thus, there is a practical size limit on vertical axis wind turbines known hitherto. Additionally, because the rotor in a vertical axis wind turbine spins about a vertical axis the wind part of the rotor is moving with the wind while a diametrically opposite part of the rotor is moving towards the wind and must counter the oncoming force of the wind.

It is an object of the present invention to provide a shaftless vertical axis wind turbine that can be made to a taller and larger scale than wind turbines known hitherto in order to greater harness wind energy. It is another object of the present invention to provide a vertical axis wind turbine that overcomes or at least ameliorates disadvantages with known wind turbines, or at least to provide the public with a useful alternative.

### Summary of the Invention

According to the invention there is provided a shaftless vertical axis wind turbine comprising:
a stationary hollow core having inner and outer circular walls with a void between the inner and outer walls, and
a rotor rotatably supported about the core and having a plurality of radially extending rotor arms each having a wind engaging rotor blade located at a distal end.

Preferably, the wind turbine further comprises a plurality of vertical ribs within the void and connecting the inner and outer walls.

Preferably, the wind turbine further comprises two or more rotors located one above the other for independent rotation about the core.

Preferably, each one of the rotors is mechanically connected with an electric generator.

Preferably, there is a generator driven by each one of the rotors.

Preferably, the generator is a direct drive type generator.

Preferably, the wind turbine further comprises a pair of electricity generating windings located on the core and rotor respectively for generating electricity during relative movement between the core and rotor, without the use of any mechanical gearing system.

Preferably, the rotor is supported on a ledge extending about the outer wall of the core.

Preferably, the outer wall of the core is stepped to define the ledge.

Preferably, the rotor comprises upper rollers or wheels that rotatably support the rotor on the ledge, and lower rollers or wheels that rotatably support the rotor about the outer wall of the core.

Preferably, the rotor further comprises second upper rollers or wheels that rotatably support the rotor about the outer wall of the core.

Preferably, the ledge has an abutment and at least one of the upper wheels or second upper wheels engage against the abutment.

Preferably, the radially extending rotor arms comprises tie-stayed truss members.

Preferably, the radially extending rotor arms are tapered towards the distal ends.

Preferably, the wind engaging blades are lift-type rotor blades, and the rotor arms further comprises a drag type rotor blade located adjacent the core.

Preferably, the rotor comprises a tubular carousel rotatably supported about the core with the plurality of rotor arms extending from the carousel.

Preferably, the wind engaging blades are lift-type rotor blades, and the rotor further comprises a plurality of drag type rotor blade located about the carousel.

Preferably, the wind turbine further comprises a pump reserve hydro electricity generation system.

Further aspects of the invention will become apparent from the following description, which is given by way of example only and is not intended to limit the scope of use or functionality of the invention.

### Brief Description of the Drawings

An exemplary form of the present invention will now be described by way of example only and with reference to the accompanying drawings, in which:
Figure 1 is a section elevation illustration of a first embodiment of a multi-stage wind turbine according to the invention,
Figure 2 is a section plan illustration through A-A of Figure 1,
Figure 3 is a section plan illustration through B-B of Figure 1,
Figure 4 is a section elevation illustration of a rotor arm and blade of the first embodiment wind turbine,
Figure 5 is an illustration of the rotor mounting and generator arrangement of the first embodiment wind turbine,
Figure 6 is an illustration of an alternative embodiment for the generator of the first embodiment wind turbine,
Figure 7 is an illustration of a second arrangement for mounting the rotor in the first embodiment wind turbine,
Figure 8 is an illustration of a third arrangement for mounting the rotor in the first embodiment wind turbine,
Figure 9 is a section elevation illustration of a second embodiment of a multi stage wind turbine according to the invention having a different rotor arm construction,
Figure 10 is a section plan illustration through C-C of Figure 9,
Figure 11 is a section plan illustration through D-D of Figure 9,
Figure 12 is a section elevation illustration of a pair of rotor arms and a blade of the second embodiment wind turbine,
Figure 13 is a section plan illustration through an upper truss arm of the second embodiment wind turbine,
Figure 14 is a section plan illustration through a lower truss arm of the second embodiment wind turbine,
Figure 15 is an illustration of an arrangement for mounting the rotor in the second embodiment wind turbine,
Figure 16 is an enlarged illustration of the top roller set of the arrangement illustrated in Figure 15,
Figure 17 is a section plan illustration at C-C in the second embodiment illustrated in Figure 15,
Figure 18 is a section plan illustration at D-D in the second embodiment illustrated in Figure 15,
Figure 19 is a section plan illustration, at the top of the rotor, of a third embodiment of a multi stage wind turbine according to the invention having a different rotor arm design and a plurality of drag-type rotor fins about the rotor carousel, and
Figure 20 is a section plan illustration, at the bottom of the rotor, for the embodiment of Figure 19.

### Description of the Exemplary Embodiments

The invention will now be described as practiced in a large size, i.e. tall building sized, shaftless vertical axis multi-stage wind turbine. The design of the wind turbine is such that it can be made to a very large size and in particular much larger than known wind turbines. Hitherto the largest wind turbines are horizontal shaft wind turbines having a blade diameter of up to 126 metres. By large scale the inventors intend that a wind turbine according to the invention could have a diameter, or width, at its base of between 250 and 350 metres and a vertical height of between 300 and 500 metres or higher. This is, however, not intended to limit the use or functionality of the invention and a skilled addressee will appreciate that principles of the invention can be applied to a wind turbine of any size, bigger or smaller.

Because a wind turbine according to the invention can be made to such a large scale it can capture a large area of wind at greater heights where wind velocity is higher. The power (P) potentially available in the wind is given by ½ ρAv³ where ρ is the density of air, A is the swept area of the turbine rotor, and v is the velocity of wind. Therefore, the amount of power that can be generated by a wind turbine increases proportionally to the area swept out by its rotors and increases to the cubic power of wind speed. Being up to 350 metres wide the wind turbine has a large area swept out by its rotors. Being able to reach heights of 500 metres or more means that the wind turbine is exposed to winds of higher velocity and thus a wind turbine according to the invention is able to tap greater energy potential of the wind.

Construction of a wind turbine of the size referred to above may use well known building construction and large scale engineering techniques. Numerous tall buildings of up to 500 or more metres have been constructed in most countries of the world and the building and construction techniques for such structures are easily within the know-how of the skilled addressee. The individual structural elements and features of the wind turbine described herein lend themselves to such known construction techniques.

The apparatus of the preferred embodiment is "multi-stage" in that a plurality of independent turbines, each with a respective rotor, are stacked vertically about a common vertical cylindrical supporting structure. Each turbine is associated with its own electrical generator, either by direct drive, gearing or other transmission means. As the vertical wind turbine may extend to a height of several hundred metres it may experience different wind directions and velocities at different levels through its height. Each turbine is free to rotate in response to the wind that it experiences independently of a generator at a different level which may be experiencing different wind conditions. However, this is not essential to the invention and the wind turbine may be made to have just a single rotor.

A wind turbine according to the invention is shaftless. In this document "shaftless" refers to the fact that each rotor of the wind turbine is a freely rotating structure. There is no shaft coaxial with the rotor to transmit torque to a generator, as is the case in conventional rotating electrical machines and known vertical and horizontal shaft wind turbines.

### First Preferred Embodiment

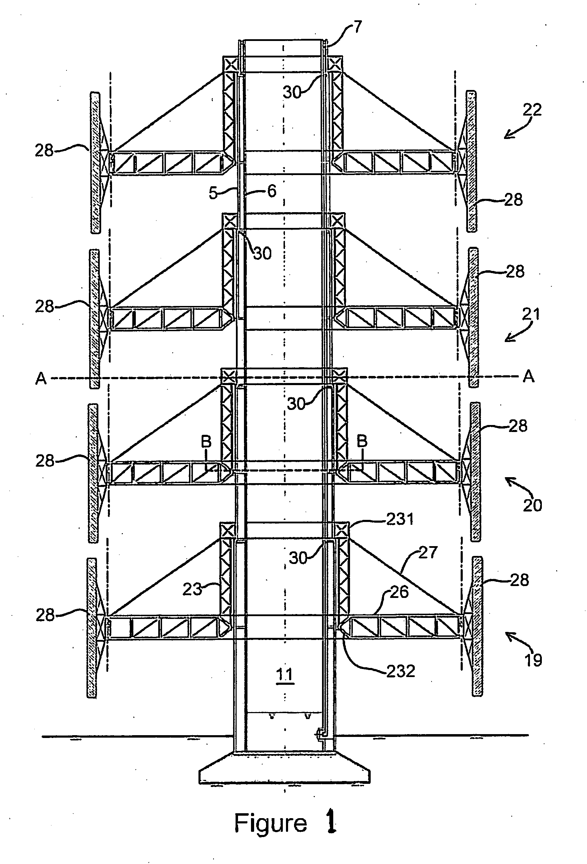

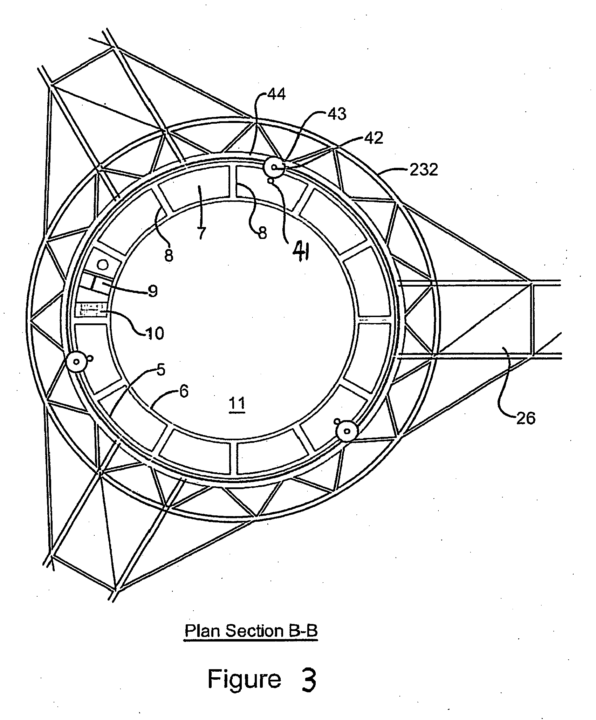

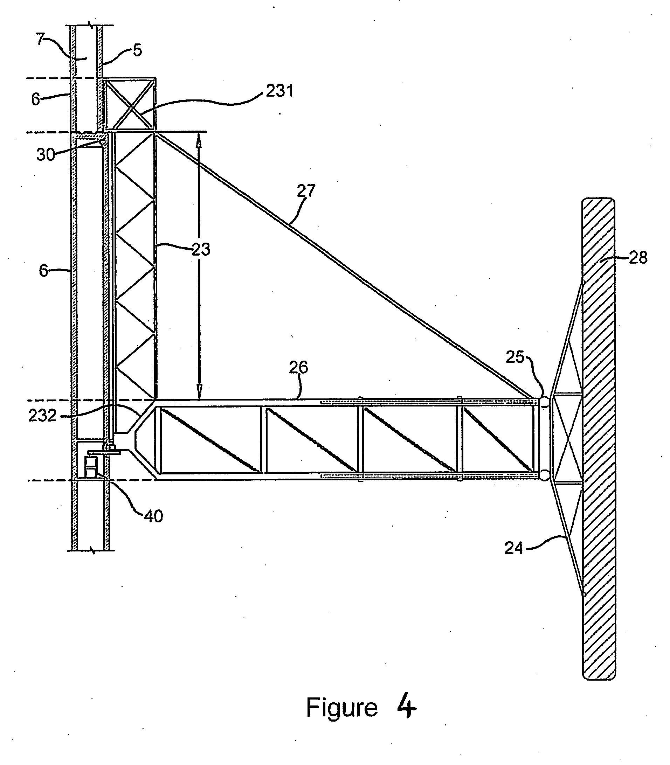

Figures 1-5 depicted a first embodiment of a shaftless vertical multi-stage wind turbine 1 according to the invention. Although not critical to the invention in terms of scale, the turbine has a diameter of 350 metres and a height of up to 500 metres. The wind turbine 1 comprises three basic functional parts, namely a vertical supporting structure, at least one wind driven rotor located about the structure and a generator driven by the rotor for the generation of electricity. In the preferred embodiment there is plurality of vertically stacked independently rotating rotors. The rotors are stacked vertically one above the other and are each coupled with a corresponding power transmission and generation units located with the vertical supporting structure.

The vertical supporting structure comprises a vertically extending cylindrical tower forming the core of the wind turbine 1 and typically has a diameter of between 15% and 40% of the total wind turbine diameter. In the preferred embodiment the diameter of the core tower is 25% of the wind turbine diameter and so for a wind turbine having a diameter of 300 meters the diameter of the core tower is 75 meters. The core tower extends the full height of the wind turbine and may be caped with a roof (not shown) that is either flat, pitched or domed. The core tower is constructed with two concentric circular walls 5, 6 having a void 7 between them. A plurality of ribs 8 extend vertically within the void 7 at spaced apart circumferential locations connecting the inner and outer walls 5, 6. The vertical ribs 8 separate the void 7 between the walls into a plurality of cells. In the preferred embodiment the distance between the inner and outer tower walls 5, 6 is several meters providing sufficient room for a lift shaft 9 , stairwell 10 and machine room at each rotor level for accommodating generation equipment all within the wall void 7. The area within the inner wall 6 of the core is generally hollow creating a large centre void 11 within the structure. The core tower is made from reinforced concrete and may be constructed using known construction techniques. The double wall cellular structure of the core tower gives the tower strength to withstand large lateral forces generated by wind.

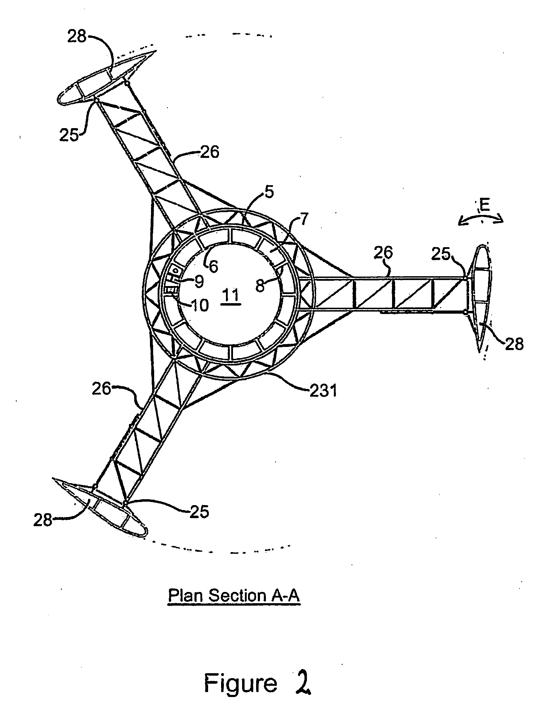

Each stage of the wind turbine includes a rotor 19, 20, 21, 22 located and freely rotatable about the core tower. The rotors at each stage can be of the same size or different sizes. The rotors 19, 20, 21, 22 comprise a fully trussed tubular carousel structure 23 rotatably supported about the core. A plurality of tie-stayed trussed arms 26 extend radially from the bottom 232 of the carousel 23. The radial truss arms 26 are stayed by tie members 27 extending from top 231 of the carousel 23 to the distal end of the radial truss arm 26. At the distal ends of each radial truss arm 26 is a generally aerofoil shaped lift-type blade 28. The blade 28 is located on a sub-frame 24 pivotally affixed to the radial truss arm 26 at a hinge 25. The blade 28 pivots about hinge joint 25 to have an actively varying "pitch" angle (depicted by arrow E in Figure 2) to the wind so as to turn more efficiently under a wide range of wind conditions. In the preferred embodiment there are three symmetrically spaced trussed radial arms 26 and blades 28 on each rotor, however this is not meant to limit the scope of use or functionality of the invention. The skilled addressee will appreciate that 2, 4, 5, 6 or more blades may be used with varying degrees of power and efficiency.

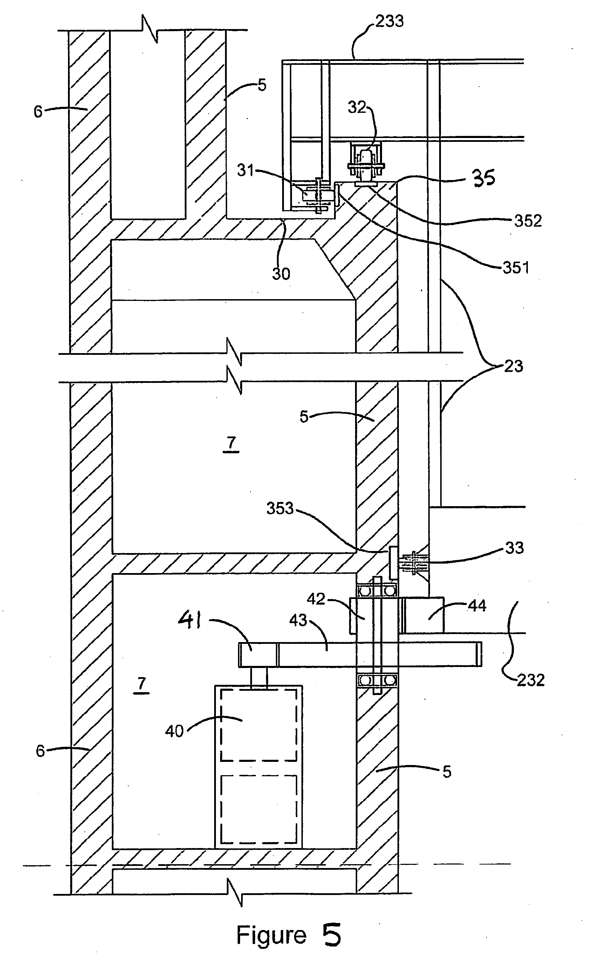

Referring to figure 5, the outer wall of the core tower is stepped at the level of each rotor stage 19, 20, 21, 22 to provide ledges 30 about the outer periphery of the core tower. Each rotor is rotatably supported about the core tower on the respective ledges 30 located around the outer periphery of the core tower. The outer edge of each ledge 30 has an abutment 35. An inwardly extending hook frame portion 233 of the rotor locates over the ledge 30. There are sets of wheels or rollers 31 located circumferentially about the inner edge of the inwardly extending frame portion 233 that run horizontally on a circular track 351 affixed to the inward face of the abutment 35. Second sets of wheels or rollers 32 are also located circumferentially about the inner edge of underside of the frame portion 233 and vertically on a second circular track 352 affixed to the upward face of the abutment 35. The upper wheels rollers sets 31, 32 provide vertical and horizontal lateral support to the rotor against the outer periphery of the concrete core tower. There is also a plurality of thrust rollers 33 located about the inner periphery of the bottom 232 of the rotor carousel 23. The trust rollers 33 run on a circular track 353 affixed to the outer wall 5 of the core to provide lateral support for the lower part of the rotor against the outer periphery of the core tower. Thus each rotor is suspended vertically at a top part of its frame from a ledge 30 and is provided with vertical and horizontal lateral supports by the cooperation of the upper wheels and rollers 31, 32 and the thrust rollers 33. The rotor rotates about the core tower under the effect of wind interaction with the aerofoil shaped blades at the distal ends of the rotor arms.

Movement of the rotor is used to mechanically turn a generator 40 located with the core tower by means of gearing located adjacent the roller thrust roller 33. A pair of gears 42, 43 is rotatably located in an opening in the core tower outer wall. The smaller gear 42 is engaged by a ring gear 44 located below the thrust roller 33 about the inner periphery of the lower annular member 232 and rotates the smaller gear 42 with movement of the rotor. The smaller gear is fixed with the larger gear 43 which engages a generator gear 41 to turn the generator 40.

### Alternative arrangement for the generator

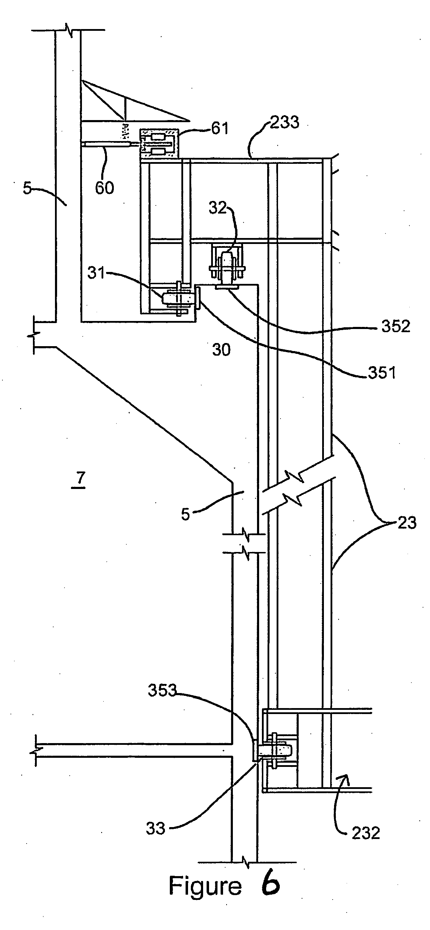

The mechanically turned generator 40 is not essential to the invention. Any type of suitable power transmission and/or generation system known in the art may be used to convert rotational energy of the rotors into electricity. For example, direct drive (gearless) generator systems, without the use of any mechanical gearing, may be used. In a direct drive generator system, there is a set of stationary components and another set of rotating components. One of the components contains the electro magnetic winding, or in case permanent magnets are used, the permanent magnets and their holders and the other components contain the conductive windings. Electricity is produced by the relative movement of the rotating component through or about the static component. Figure 6 illustrates such a direct drive system wherein permanent magnet field poles 61 are attached to the upper edge of the inwardly extending portion 233 of the rotor carousel 23 and the stator winding part 60 thereof is affixed to the outer wall 5.

### Alternative arrangement for the rotor supports

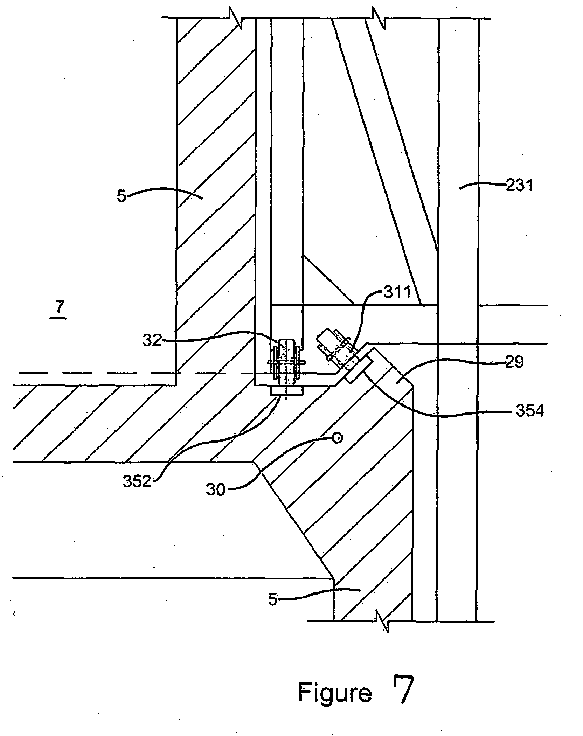

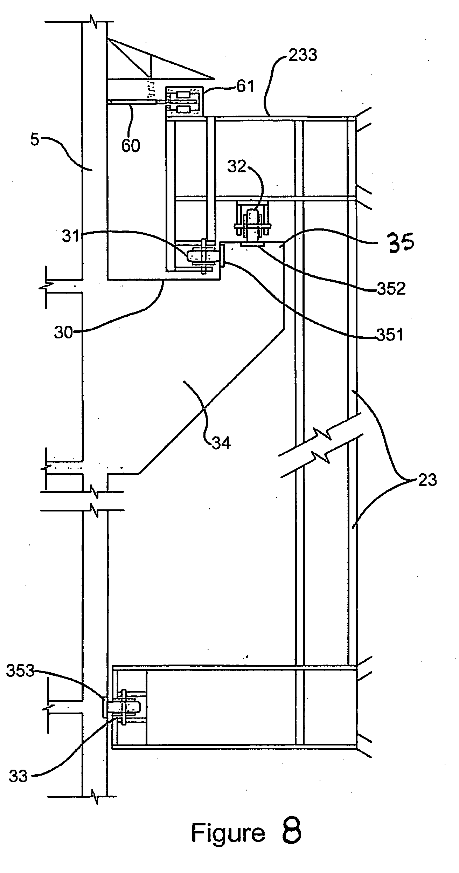

Figure 7 illustrates a second arrangement for mounting the rotor from the tower ledges 30. The ledge 30 has a chamfered abutment 29 at its outer edge. A lateral stabilisation wheel 311 is provided to run against a track 354 affixed to the face of the chamfered abutment 29 providing lateral stabilisation for the rotating rotor. Figure 8 illustrates yet another embodiment the outer wall of the core tower which is cylindrical without steps and the rotors are mounted on corbel-type roller track beam 34 located around the outer periphery of the core tower and fixed thereto.

### Second Preferred Embodiment having an alternative rotor arm construction

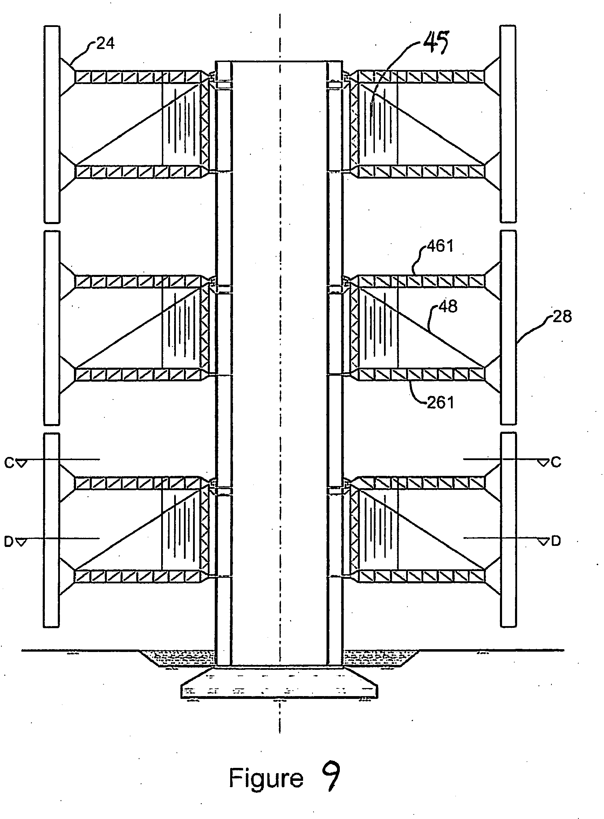

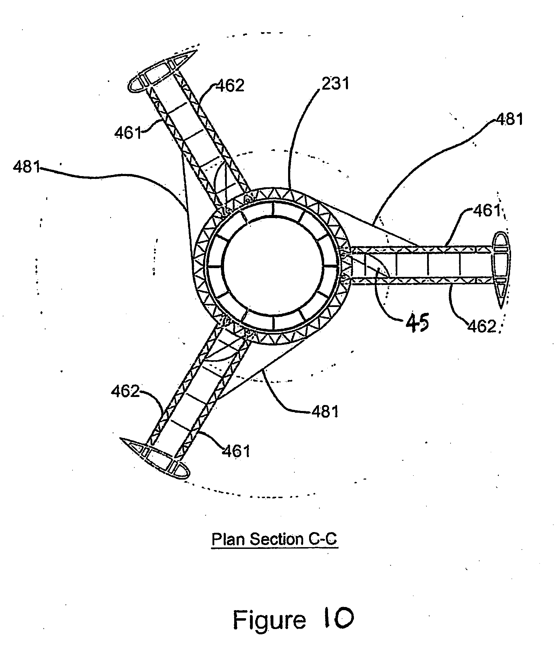

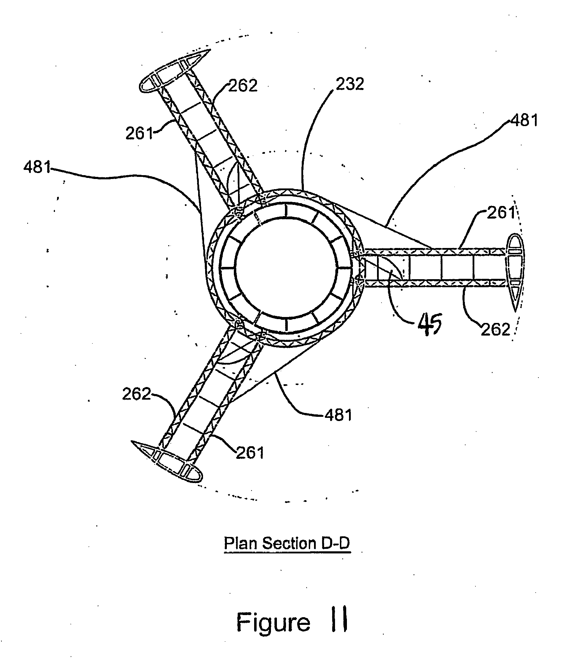

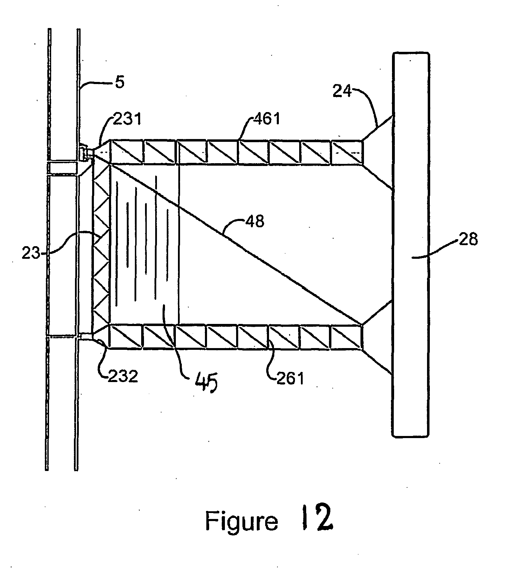

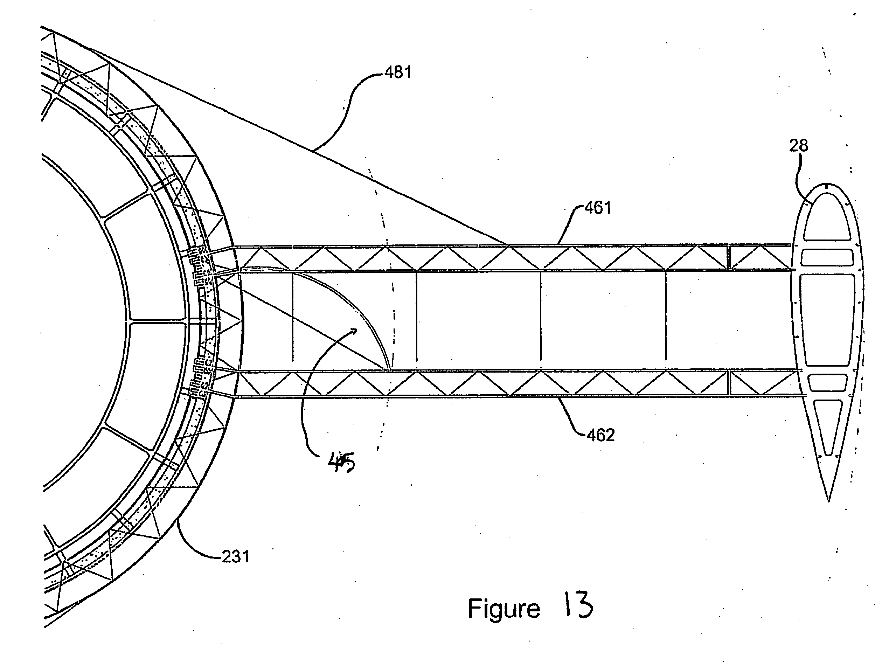

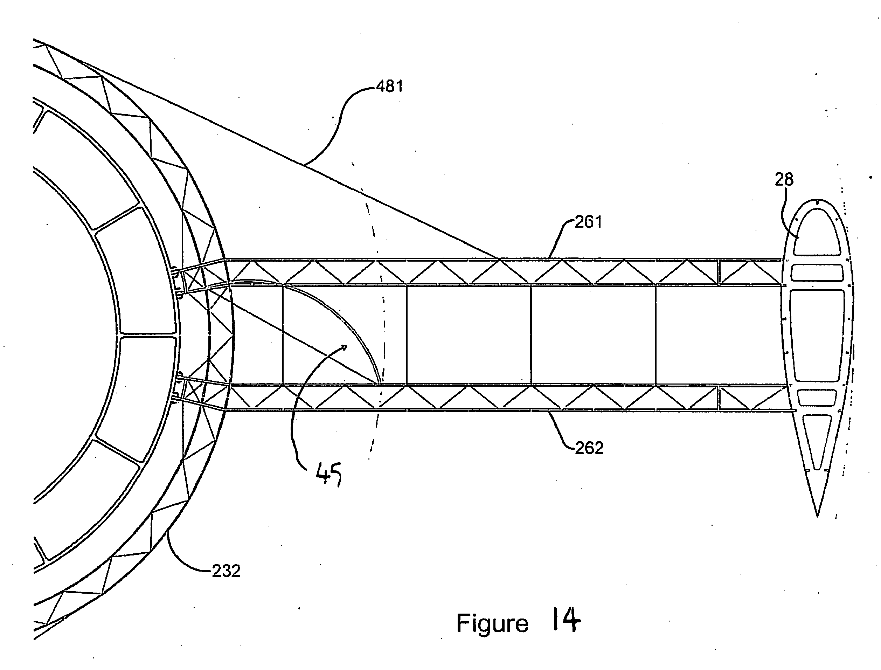

Figures 9-14 depict a second preferred embodiment of a wind turbine according to the invention which has an alternative rotor arm arrangement. In this embodiment the rotor blades are supported about the rotor carousel by four radially extending trussed arms 461, 462, 261, 262. The upper part of the blade 28 is supported by a first pair of horizontally spaced apart trussed arms 461, 462 extending radially from the top 231 of the rotor carousel 23. The bottom part of the blade 28 is supported by a corresponding second pair of horizontally spaced part trussed arms 261, 262 extending radially from bottom 232 of the rotor carousel 23. In between the upper and lower pairs of trussed arms 461, 462, 261, 262 there are diagonal tie-stay arms 48 extending from the inner end of the upper set of radial trussed arms 461, 462 to the distal end of the lower set of radial trussed arms 261, 262. The leading truss arms 461, 261 in each pair may also be tie-stayed by stays 481 in the horizontal plane to the rotor carousel 23 to provide additional stability.

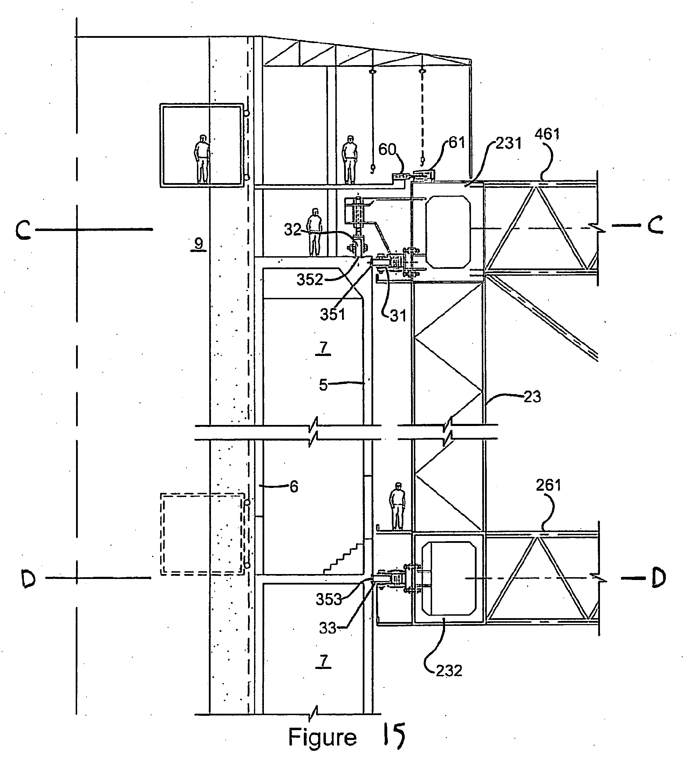

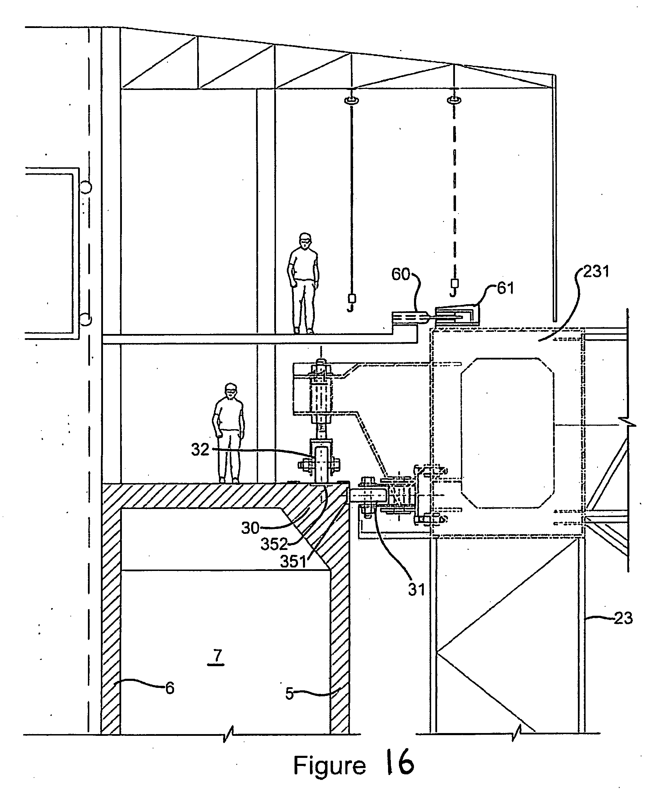

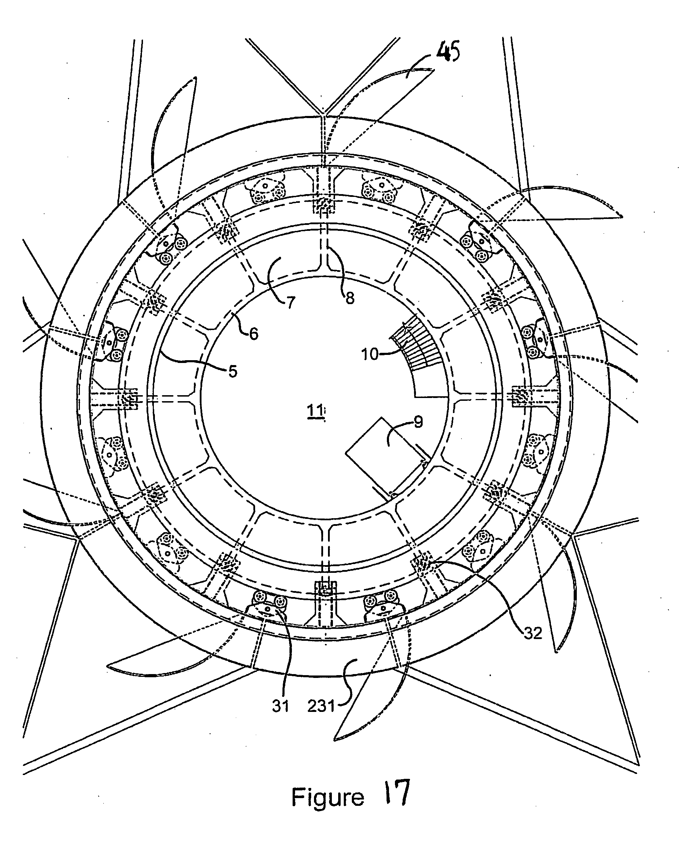

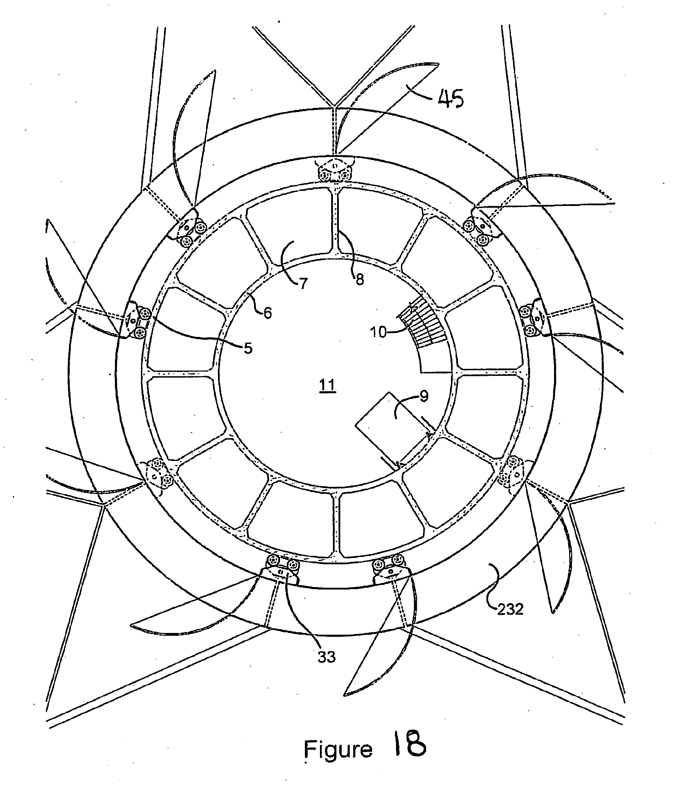

Figures 15 and 16 illustrates an arrangement for mounting the rotor from the tower ledges 30, which can be used with the second preferred embodiment of a wind turbine. There is no abutment 35. The upper lateral stabilisation wheel 31 is provided to run against a track 351 that is affixed to the outer circumferential face of the core. Figures 17 and 18 are plan views of this arrangement.

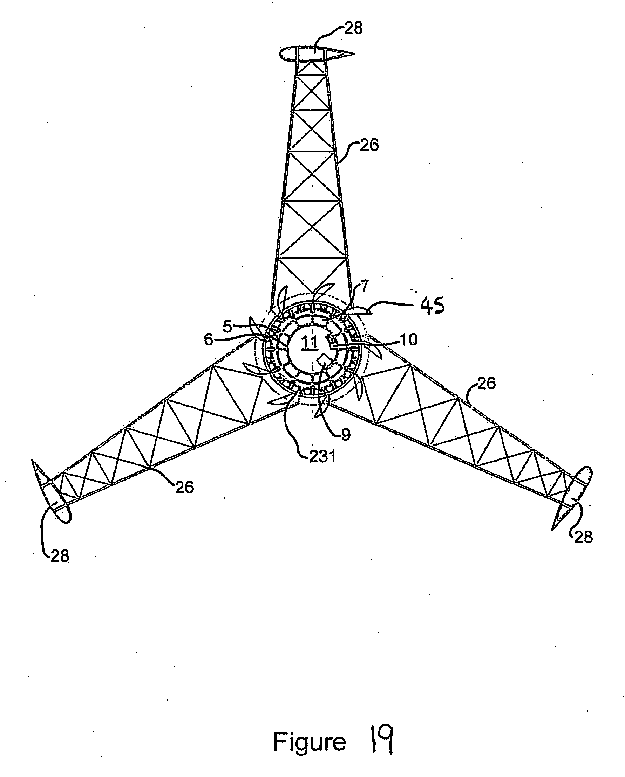

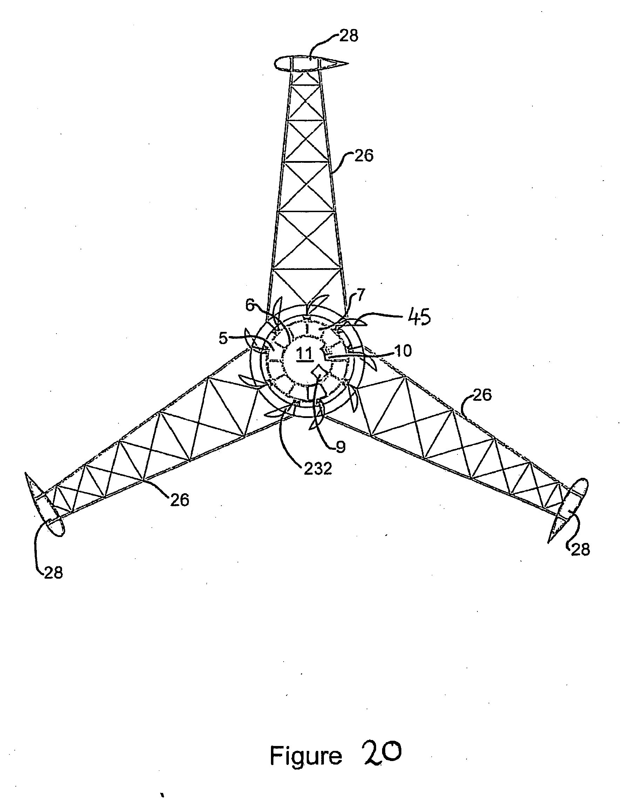

Figures 19 and 20 illustrates a further alternative design of the rotor arm in which the arm is tapered from the carousel 23 towards the rotor blade 28. Tapering provides the rotor arm with a lot more strength to resist flexing and blending in a lateral direction during rotation of the rotor.

In addition, the inventors envisage that the rotor arm in this and other embodiments may be enclosed by a aerodynamically shaped skin in order to reduce drag of the rotor arm as it moves through the air.

### Third Preferred Embodiment having a combo blade arrangement

One of the disadvantages of lift-type vertical axis wind turbines is that there is a (negative power) drag against the rotational direction when the blades 28 of the rotor rotate into the wind. They require sufficiently high wind speed across the blade surface in order to generate the aerodynamic forces needed to start the rotor. To overcome the above difficulties, in a further embodiment of the present invention, curved fins are added about the rotor carousel 23 to create a combo wind turbine. Figures 9-14 illustrate the preferred embodiment of this combo wind turbine. The curved fins are located between the upper and lower pairs of trussed arms (461, 462), (261, 262). The fins 45 act like drag-type rotor blades in capturing the wind and help to start the rotor turning. As the rotor speed increases the aerodynamic forces generated at the aerofoil type blades 28 also increase and contribute to turning forces on the rotor. At normal rotor speeds, the predominant rotational force comes from the aerofoil type blades 28.

Although the embodiment illustrated in Figures 9-14 has three curved fins 45 all located in between the upper and lower radial truss arms pairs, this is not essential to the invention and the curved fins 45 may be of any number and of any size about the perimeter of the rotor carousel 23 so long if they are sufficient to begin turning the rotor at a desired wind speed.

Figures 19 and 20 show an alternative version of the combination blade arrangement wherein a plurality of fins 45 are arranged about the rotor carousel 23 independently of the rotor arms. This greater number of fins 45 than in the embodiment depicted in Figures 9-14 allows the fins 45 to be of smaller size thus causing less drag at higher speeds when the rotor is operating substantially by the lift effect of the outer rotor blades 28.

### Pumped reserve system

Figure 1 also illustrates an important, although not essential, feature available in a wind turbine according to the current invention. The height and size of the wind turbine make it feasible to store large volumes of water at significant height in the core tower. A significant volume of water can be stored in the upper void 7 between the inner and outer walls of the core tower without the need for significant additional strengthening of the upper parts of the tower. Likewise, no significant additional strengthening of the tower is needed to store water in the lower centre core void 11 of the tower. Such water can be moved between these upper and lower storage reservoirs by a riser pipe within the wall void or on the inner surface of the inner wall. Water is pumped by electric pump from the lower reservoir to the upper reservoir at times when the wind conditions allow more electricity to be generated than is needed for supply to the electricity grid or local power consumption. When conditions reverse or during peak load times, or when the wind is low, water is released from the upper reservoir back to the lower reservoir through a hydro generator to supplement wind generation alone. Although pumped reserve systems are known in the art, hitherto it has not been possible to incorporate a hydro pump reserve system into wind generator due to limitations on the physical size and strength of wind turbine towers and wind generation capacity of a single tower. The tower of the current invention overcomes such problems by providing a strong tall and large tower and through the incorporation of large stacked rotors to enable large generation capacity from a single tower.

Where in the foregoing description reference has been made to integers or elements having known equivalents then such are included as if individually set forth herein.

Embodiments of the invention have been described, however it is understood that variations, improvements or modifications can take place without departure from the spirit of the invention or scope of the appended claims.

## Claims

**1.** A shaftless vertical axis wind turbine comprising
a stationary hollow core having inner and outer circular walls with a void between the inner and outer walls, and
a rotor rotatably supported about the core and having a plurality of radially extending rotor arms each having a wind engaging rotor blade located at a distal end.

**2.** The shaftless wind turbine of claim 1 further comprising a plurality of vertical ribs within the void and connecting the inner and outer walls.

**3.** The shaftless wind turbine of claims 1 or 2 further comprising two or more rotors located one above the other for independent rotation about the core.

**4.** The shaftless wind turbine of claim 3 wherein each one of the rotors is mechanically connected with an electric generator.

**5.** The shaftless wind turbine of any preceding claim wherein there is a generator driven by each one of the rotors.

**6.** The shaftless wind turbine of any one of claim 3 to 5 wherein the generator is a direct drive type generator.

**7.** The shaftless wind turbine of any preceding claim further comprising a pair of electricity generating windings located on the core and rotor respectively for generating electricity during relative movement between the core and rotor, without the use of any mechanical gearing system.

**8.** The shaftless wind turbine of any preceding claim wherein the rotor is supported on a ledge extending about the outer wall of the core.

**9.** The shaftless wind turbine of claim 8 wherein the outer wall of the core is stepped to define the ledge.

**10.** The shaftless wind turbine of claim 8 wherein the rotor comprises upper rollers or wheels that rotatably support the rotor on the ledge, and lower rollers or wheels that rotatably support the rotor about the outer wall of the core.

**11.** The shaftless wind turbine of claim 10 wherein the rotor further comprises second upper rollers or wheels that rotatably support the rotor about the outer wall of the core.

**12.** The shaftless wind turbine of claim 11 wherein the ledge has an abutment and at least one of the upper wheels or second upper wheels engage against the abutment.

**13.** The shaftless wind turbine of any preceding claim wherein the radially extending rotor arms comprises tie-stayed truss members.

**14.** The shaftless wind turbine of any preceding claim wherein the radially extending rotor arms are tapered towards the distal ends.

**15.** The shaftless wind turbine of any preceding claim wherein the wind engaging blades are lift-type rotor blades, and the rotor arms further comprises a drag type rotor blade located adjacent the core.

**16.** The shaftless wind turbine of any preceding claim wherein the rotor comprises a tubular carousel rotatably supported about the core with the plurality of rotor arms extending from the carousel.

**18.** The shaftless wind turbine of claim 16 wherein the wind engaging blades are lift-type rotor blades, and the rotor further comprises a plurality of drag type rotor blade located about the carousel.

**19.** The shaftless wind turbine of any preceding claim further comprising a pump reserve hydro electricity generation system.
